# EUROPÄISCHE PATENTSCHRIFT

(11) **EP 3 411 267 B1**
(45) Veröffentlichungstag und Bekanntmachung des Hinweises auf die Patenterteilung: **21.08.2019**
(21) Anmeldenummer: 17703706.6
(22) Anmeldetag: 01.02.2017
(51) Int. Cl.: B60Q 9/00, B60Q 3/78, B60Q 3/80, B60K 35/00, G01C 21/36

(54) **KRAFTFAHRZEUG**
MOTOR VEHICLE
VÉHICULE AUTOMOBILE

(30) Priorität: 03.02.2016 DE 102016001180
(43) Veröffentlichungstag der Anmeldung: 12.12.2018
(73) Patentinhaber: Audi AG, 85045 Ingolstadt (DE)
(72) Erfinder: KASTNER, Julia, 92339 Beilngries (DE); TONTSCH, Friedrich-Uwe, 85051 Ingolstadt (DE); BERLITZ, Stephan, 86529 Schrobenhausen (DE)
(86) Internationale Anmeldenummer: PCT/EP2017/052150
(87) Internationale Veröffentlichungsnummer: WO 2017/134104

(56) Entgegenhaltungen:
- DE-A1-102008 064 022
- DE-A1-102012 210 750
- DE-A1-102013 225 033
- DE-A1-102014 003 196

## Beschreibung

Die Erfindung betrifft ein Kraftfahrzeug, umfassend wenigstens ein linienförmiges Leuchtmittel zur direkten und/oder indirekten Beleuchtung eines Fahrzeuginnenraums, das sich zumindest abschnittsweise horizontal entlang wenigstens eines Bauteils des Kraftfahrzeugs erstreckt, und eine Positionserfassungseinrichtung zur Erfassung einer Egoposition des Kraftfahrzeugs. Kraftfahrzeuge weisen häufig Navigationseinrichtungen auf, die einen Fahrer bei einer Fahrt zu einem eingegebenen Zielort unterstützen. Diese können Funktionen aufweisen, um dem Fahrer über eine voraussichtliche Fahrtdauer zum Ziel zu informieren. Eine Informationsausgabe kann akustisch oder optisch durch eine Anzeigeeinrichtung des Navigationsgerätes erfolgen.

Eine akustische Ausgabe kann für einige Fahrer oder weitere Insassen störend und daher nicht gewünscht sein. Eine optische Darstellung an einer Anzeigeeinrichtung des Navigationssystems erfolgt häufig außerhalb des Blickfeldes des Fahrers während der Fahrt und zudem außerhalb des Blickfelds weiterer Passagiere. Eine Entfernung zum Zielort kann jedoch auch für weitere Insassen des Kraftfahrzeugs, beispielsweise für im Heck des Kraftfahrzeugs befindliche Kinder, interessant sein. Diese müssen die Entfernung bei einer optischen Darstellung der Information jedoch vom Fahrer erfragen, der hierdurch und durch einen notwendigen Blick auf die Anzeigeeinrichtung der Navigationseinrichtung vom normalen Fahrbetrieb abgelenkt wird.

Ein gattungsgemäßes Kraftfahrzeug ist aus DE 10 2008 064 022 A1 bekannt.

Der Erfindung liegt daher die Aufgabe zugrunde, ein Kraftfahrzeug anzugeben, dass eine Wahrnehmung der verbleibenden Entfernung zu einem Zielort für den Fahrer und/oder für weitere Fahrzeuginsassen ermöglicht bzw. verbessert.

Die Aufgabe wird erfindungsgemäß durch ein Kraftfahrzeug mit den Merkmalen des Anspruchs 1 gelöst.

Erfindungsgemäß wird vorgeschlagen, linienförmige Leuchtmittel zur direkten und/oder indirekten Beleuchtung eines Fahrzeuginnenraums derart auszubilden, dass sie separat ansteuerbare Leuchtsegmente aufweisen, wobei diese in Abhängigkeit einer Entfernungsinformation ansteuerbar sind, um eine Erfassung dieser Information durch Insassen des Kraftfahrzeugs zu ermöglichen bzw. zu verbessern. Linienförmige Leuchtmittel, die sich zumindest abschnittsweise horizontal entlang wenigstens eines Bauteils des Kraftfahrzeugs erstrecken, werden in herkömmlichen Kraftfahrzeugen dazu genutzt, eine sogenannte Ambiente-Beleuchtung bereitzustellen, bei der ein Kraftfahrzeug gleichmäßig, insbesondere mit einer vorgebbaren Leuchtfarbe, ausgeleuchtet wird. Erfindungsgemäß können derartige Leuchtmittel derart weitergebildet werden, dass mehrere separat ansteuerbare Leuchtsegmente vorgesehen werden, die in Abhängigkeit der Entfernungsinformation ansteuerbar sind. Die linienförmigen Leuchtmittel erstrecken sich vorzugsweise im Wesentlichen horizontal. Beispielsweise können wenigstens 70 % oder wenigstens 90 % der Linienlänge horizontal verlaufen. Der Verlauf des Leuchtmittels kann durch eine geringfügige Krümmung, deren Radius insbesondere größer ist als die Fahrzeugbreite, von der Horizontalen abweichen, um beispielsweise einer Kontur eines Bauteils zu folgen.

Die einzelnen Leuchtsegmente können jeweils ein Leuchtelement aufweisen oder aus einer Gruppe von gemeinsam gesteuerten Leuchtelementen bestehen. Als Leuchtelement kann beispielsweise eine RGB-LED genutzt werden, für die, insbesondere durch eine Pulsweitenmodulation, die Leuchtfarbe und die Leuchthelligkeit vorgegeben werden kann. Die Steuerung der Leuchthelligkeit und/oder der Leuchtfarbe kann durch eine Steuereinrichtung erfolgen, die dem Leuchtmittel zugeordnet ist, jedoch auch durch eine zentrale Steuereinrichtung, die mehrere der Leuchtmittel steuert. Beispielsweise kann die Vorgabe der einzelnen Pulsweiten oder die Vorgabe eines Steuersignals zur Pulsweitenmodulation über einen Fahrzeugbus erfolgen.

Die Steuereinrichtung kann als Navigationseinrichtung ausgebildet sein oder das Kraftfahrzeug kann eine Navigationseinrichtung umfassen, durch die die Entfernung und/oder weitere Zielinformationen an die Steuereinrichtung bereitstellbar sind. Die Vorgabe des Zielortes kann manuell durch einen Nutzer, beispielsweise durch eine Zieleingabe am Navigationsgerät durch eine Spracheingabe, einen Touchscreen, einen Dreh-Drücksteller oder Ähnliches, erfolgen. Es ist jedoch auch möglich, dass durch die Navigationseinrichtung oder die Steuereinrichtung automatisch ein Zielort erkannt wird. Beispielsweise können vorangehende Fahrten des gleichen Fahrers bzw. des gleichen Kraftfahrzeugs statistisch ausgewertet werden und aus einem bisherigen Fahrverlauf kann während einer Fahrt aus dem Vergleich mit den Fahrverläufen vorangehenden Fahrten ein voraussichtlicher Zielort bestimmt und als vorgegebener Zielort genutzt werden. Verfahren zur Bestimmung voraussichtlicher Zielorte sind im Stand der Technik bekannt und sollen daher nicht detailliert erläutert werden. Die Positionserfassungseinrichtung kann auf einer satellitengestützten Positionserfassung, beispielsweise GPS, basieren.

Es ist möglich, dass nur Teile der Leuchtsegmente in Abhängigkeit der Entfernungsinformation angesteuert werden. In diesem Fall können die weiteren Leuchtsegmente zur Abgabe einer Ambiente-Beleuchtung, insbesondere mit einer einstellbaren Leuchtfarbe und/oder Leuchthelligkeit, dienen oder andere Informationsfunktionen bereitstellen.

In dem oder an dem Kraftfahrzeug kann wenigstens ein Helligkeitssensor zur Erfassung einer Umgebungshelligkeit vorgesehen sein. Die Helligkeit der Leuchtsegmente kann zusätzlich in Abhängigkeit der Umgebungshelligkeit steuerbar sein.

Die Entfernung zu dem vorgegebenen Zielort kann eine Luftlinien-Entfernung sein. Vorzugsweise erfolgt eine Bestimmung der Entfernung jedoch in Abhängigkeit von vorgegebenen Kartendaten entlang eines durch das Kraftfahrzeug befahrbaren Fahrweges. Eine Prognose der Fahrzeit kann im einfachsten Fall dadurch erfolgen, dass eine verbleibende räumliche Entfernung durch eine momentane Geschwindigkeit oder durch eine über ein vorgegebenes Zeitfenster gemittelte Geschwindigkeit geteilt wird. Vorzugsweise können jedoch Routeninformationen, die vorgegebenen Kartendaten entnehmbar sind, genutzt werden, die beispielsweise Straßentypen oder Geschwindigkeitsbegrenzungen beschreiben. Sind Verkehrsinformationen verfügbar, beispielsweise über einen Internet- oder Radio-Datendient, beispielsweise TMC, so können diese bei der Prognose der Fahrzeit berücksichtigt werden.

Das Kraftfahrzeug kann mehrere der linienförmigen Leuchtmittel umfassen, die sich horizontal in Umfangsrichtung des Fahrzeuginnenraums zueinander benachbart oder voneinander beabstandet erstrecken, wobei die Steuereinrichtung dazu eingerichtet ist, die Leuchthelligkeit und/oder Leuchtfarbe der Leuchtsegmente wenigstens zweier der Leuchtmittel gleichzeitig in Abhängigkeit der Entfernungsinformation zu steuern und/oder wenigstens eines der Leuchtmittel in Abhängigkeit einer Bedieneingabe und/oder eines den Zielort betreffenden Zielparameters auszuwählen, um die Leuchthelligkeit und/oder Leuchtfarbe der Leuchtsegmente dieses Leuchtmittels in Abhängigkeit der Entfernungsinformation zu steuern. Mehrere der linienförmigen Leuchtmittel können den Fahrzeuginnenraum umlaufend angeordnet sein. In Vertikalrichtung können die Leuchtmittel in gleicher Höhe oder voneinander vertikal beabstandet angeordnet sein. Es ist möglich, dass die einzelnen Leuchtmittel in Umfangsrichtung nicht oder nur unwesentlich überlappen.

Bedieneingaben können durch separate Bedienelemente, ein Multifunktionssystem des Kraftfahrzeugs, das, beispielsweise menügeführt, eine Bedienung einer Vielzahl von Kraftfahrzeugsystemen ermöglicht, und/oder über eine Sprachsteuerung erfasst werden.

Durch die Steuereinrichtung kann eine erste Leuchthelligkeit und/oder Leuchtfarbe für eine Gruppe horizontal benachbarter Leuchtsegmente und eine unterschiedliche zweite Leuchthelligkeit und/oder Leuchtfarbe für wenigstens ein zu der Gruppe horizontal benachbartes Leuchtsegment vorgebbar sein, wobei die Anzahl der Leuchtsegmente in der Gruppe in Abhängigkeit der Entfernungsinformation vorgegeben wird. Die Gruppe kann Leuchtsegmente eines oder mehrerer der Leuchtmittel umfassen. Vorzugsweise werden alle Leuchtsegmente außerhalb der Gruppe und/oder jeweils wenigstens ein Leuchtsegment auf beiden Seiten benachbart zu der Gruppe zur Abgabe einer zweiten Leuchthelligkeit und/oder Leuchtfarbe angesteuert.

Es kann eine Anfangsanzahl der Leuchtsegmente vorgegeben werden, die der Anfangsentfernung zwischen der Egoposition und dem vorgegebenen Zielort zum Zeitpunkt der Vorgabe des Zielortes zugeordnet ist. Wird ein neuer Zielort vorgegeben, so entspricht die Anzahl der Leuchtsegmente in der Gruppe die Anfangsanzahl. Während der Annäherung des Kraftfahrzeugs an dem Zielort kann die Anzahl der Leuchtsegmente in der Gruppe derart bestimmt werden, dass das Verhältnis der Anzahl zu der Anfangsanzahl gleich zu dem Verhältnis der Entfernung zu der Anfangsentfernung ist. Durch die Anzahl der Leuchtsegmente in der Gruppe wird somit eine relative Entfernung zu dem Zielort ausgehend von der Anfangsentfernung dargestellt. Alternativ kann die Anzahl auch mit einer absoluten Entfernung korrelieren, wobei verschiedene Skalen vorgegeben werden können und/oder in Abhängigkeit von verschiedenen Entfernungsklassen verschiedene Leuchtfarben gewählt werden können.

Es ist auch möglich, dass die Anzahl der Leuchtsegmente, die zur Abgabe der zweiten Leuchthelligkeit und/oder Leuchtfarbe angesteuert werden, von einer ausgehend von der Anfangsentfernung bereits zurückgelegten Entfernung abhängt. Die Summe der Anzahlen der Leuchtsegmente, für die die erste Leuchthelligkeit und/oder Leuchtfarbe vorgegeben wird und für die die zweite Leuchthelligkeit und/oder Leuchtfarbe vorgegeben wird, kann konstant sein, wobei das Verhältnis der Anzahlen dem Verhältnis der aktuellen Entfernung zum Zielort zu der ausgehend von der Anfangsentfernung bereits zurückgelegten Entfernung entspricht.

Durch die Steuereinrichtung wird in Abhängigkeit einer Bedieneingabe und/oder eines den Zielort betreffenden Zielparameters eine horizontale Position der Gruppe auf dem Leuchtmittel oder den Leuchtmitteln vorgegeben. Der Zielparameter kann eine in Abhängigkeit der Egoposition, einer Fahrtrichtung und des Zielortes ermittelte Richtung sein, in der sich der Zielort befindet. Somit können durch das wenigstens eine linienförmige Leuchtmittel sowohl eine Entfernung zu dem Zielort als auch eine Richtung des Zielortes angezeigt werden. Die Richtung kann bezüglich eines ausgewählten der Fahrzeugsitze bestimmt werden. Der Fahrzeugsitz kann durch eine Bedieneingabe gewählt werden oder es kann der Fahrersitz als ausgewählter Fahrzeugsitz genutzt werden.

Durch die Steuereinrichtung kann genau eines der Leuchtsegmente in Abhängigkeit der Entfernung ausgewählt werden, das zur Abstrahlung von Licht mit einer vorgegebenen Leuchtfarbe und/oder Leuchthelligkeit angesteuert wird. Bestimmte Positionen des Leuchtsegments, das entsprechend angesteuert wird, können vorgegeben absoluten oder relativen Entfernungen zum Zielort zugeordnet sein. Diese Darstellung kann mit der vorangehend beschriebenen balkenartigen Darstellung kombiniert werden, das heißt die momentane Ist-Position kann durch eine andere Leuchtfarbe und/oder Leuchthelligkeit hervorgehoben werden.

Das Bauteil kann ein Armaturenbrett und/oder eine Tür und/oder eine Karosseriesäule und/oder eine Mittelkonsole des Kraftfahrzeugs sein. Vorzugsweise können mehrere linienförmige Leuchtmittel genutzt werden, die an jeweils einem der Bauteile des Kraftfahrzeugs angeordnet sind. Beispielsweise können sich wenigstens ein Leuchtmittel entlang dem Armaturenbrett und jeweils eines der Leuchtmittel entlang der Türen des Kraftfahrzeugs erstrecken. Leuchtmittel können ausschließlich an den Vordertüren oder an den Vorder- und Hintertüren des Kraftfahrzeugs vorgesehen sein. Es kann eine zumindest abschnittsweise umlaufende Leuchtmittellinie realisiert werden, die einerseits eine Ambiente-Beleuchtung des Kraftfahrzeugs und andererseits eine Entfernungsdarstellung an verschiedenen Positionen im Kraftfahrzeug ermöglichen kann.

Der Zielort kann durch eine Bedieneingabe vorgegeben werden, wobei durch die Steuereinrichtung nach Vorgabe des Zielortes eine Ausgabeeinrichtung des Kraftfahrzeugs zur Ausgabe einer Bedienanfrage ansteuerbar und eine darauf folgende Antworteingabe erfassbar ist, wobei in Abhängigkeit der Antworteingabe ein Betriebsmodus der Steuereinrichtung zur von der Entfernung zum Zielort abhängigen Steuerung der Leuchtsegmente aktiviert oder deaktiviert wird. Beispielsweise kann eine Navigationseinrichtung nach der Zieleingabe bei einem Nutzer nachfragen, ob eine Entfernungsdarstellung durch das oder die linienförmigen Leuchtmittel aktiviert werden soll. Als Teil dieser Bedienanfrage oder als separate Eingabemöglichkeit kann auch eine Wahlmöglichkeit vorgesehen werden, welche der linienförmigen Leuchtmittel bzw. welcher Teil des bzw. der linienförmigen Leuchtmittel zur Entfernungsdarstellung genutzt werden soll bzw. sollen.

Durch die Steuereinrichtung können nach einer Zielvorgabe und/oder nach Aktivierung eines Betriebsmodus der Steuereinrichtung zur von der Entfernung abhängigen Steuerung der Leuchtsegmente und/oder bei einem Erreichen eines Zielortes die Leuchtsegmente zumindest teilweise für einen vorgegebenen Zeitraum gemäß eines vorgegebenen Musters ansteuerbar sein. Beispielsweise kann bei einer Aktivierung der Entfernungsdarstellung ein die Entfernung darstellender Balken ausgefahren werden, das heißt ausgehend von einer Mittelposition die Leuchtfarbe und/oder die Leuchthelligkeit mehrerer Leuchtsegmente fortlaufend angepasst werden. Es ist auch möglich, dass die Leuchtfarbe der Leuchtsegmente oder die Leuchthelligkeit bei einem Ankommen am Zielort geändert wird, blinkt oder ein Dimmen der Leuchthelligkeit erfolgt. Durch entsprechende Anfangs- bzw. Endanimationen für die Entfernungsdarstellung durch das oder die linienförmigen Leuchtmittel wird ein entsprechender Betriebsmodus des bzw. der Leuchtmittel für einen Nutzer intuitiv erkennbar.

Die horizontale Ausdehnung der einzelnen Leuchtsegmente kann zwischen 2 mm und 100 mm sein. Die Ausdehnung kann insbesondere wenigstens 5 oder wenigstens 10 mm sein und/oder maximal 50 oder 30 mm. Beispielsweise kann eine Ausdehnung von 16 mm vorgesehen sein. Die Breite des linienförmigen Leuchtmittels in Vertikalrichtung kann kleiner als 2 mm oder kleiner als 1 mm sein. Vorzugsweise kann die Breite 0,8 mm sein. Das Leuchtmittel kann einen gemeinsamen Diffusor für alle oder mehrere Diffusoren für die einzelnen Leuchtsegmente umfassen und/oder es kann derart im Kraftfahrzeug angeordnet sein, dass eine weitere Kraftfahrzeugkomponente zur indirekten Beleuchtung des Fahrzeuginnenraums angestrahlt wird.

Weitere Vorteile und Einzelheiten der Erfindung ergeben sich aus dem folgenden Ausführungsbeispiel sowie den zugehörigen Zeichnungen. Dabei zeigen schematisch:
- Fig. 1: eine perspektivische Ansicht des Innenraums eines erfindungsgemäßen Kraftfahrzeugs,
- Fig. 2: eine weitere Ansicht des in Fig. 1 gezeigten Kraftfahrzeugs, das die zur Steuerung der Leuchtmittel relevanten Komponenten zeigt,
- Fig. 3: eine Detailansicht eines der in Fig. 1 und 2 gezeigten Leuchtmittel, und
- Fig. 4: eine weitere Detailansicht des in Fig. 1 und 2 gezeigten Kraftfahrzeugs zur Erläuterung des Zusammenwirkens mehrerer der Leuchtmittel zur Entfernungsdarstellung.

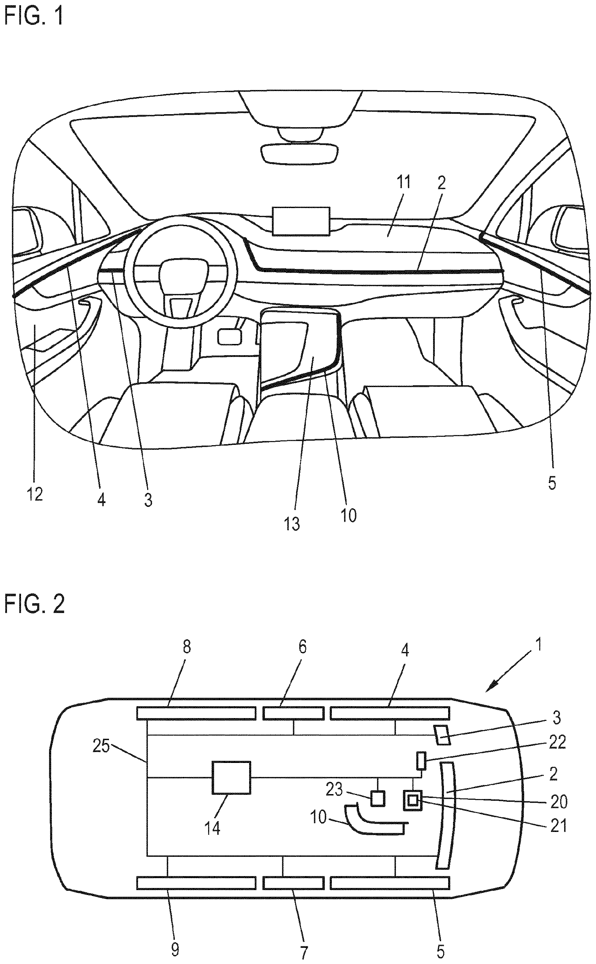

Fig. 1 und 2 zeigen unterschiedliche Ansichten eines Kraftfahrzeugs, wobei Fig. 1 schematisch eine perspektivische Darstellung des Innenraums des Kraftfahrzeugs zeigt und Fig. 2 die für die folgende Erläuterung relevanten Komponenten und ihre Kommunikation darstellt. Das Kraftfahrzeug 1 weist mehrere die linienförmige Leuchtmittel 2 - 10 auf, die zur direkten Beleuchtung des Fahrzeuginnenraums des Kraftfahrzeugs 1 dienen. In einem alternativen Ausführungsbeispiel wäre es möglich, ergänzend oder alternativ zu den Leuchtmitteln 2 - 10 zur direkten Beleuchtung zusätzliche oder alternative linienförmige Leuchtmittel vorzusehen, die den Fahrzeuginnenraum indirekt beleuchten, indem sie weitere Kraftfahrzeugkomponenten, beispielsweise einen Stoffbezug einer Tür, anstrahlen. Die folgenden Ausführungen bezüglich der linienförmigen Leuchtmittel 2 - 10 zur direkten Beleuchtung lassen sich auch auf solche indirekt beleuchtenden Leuchtmittel übertragen.

Die Leuchtmittel 2 - 10 erstrecken sich jeweils zumindest abschnittsweise horizontal entlang verschiedener Bauteile des Kraftfahrzeugs 1. Die Leuchtmittel 2 und 3 erstrecken sich entlang des Armaturenbretts 11 und die Leuchtmittel 4 und 5 entlang einer Kontur der vorderen Fahrzeugtüren 12. Die Leuchtmittel 6 und 7 erstrecken sich horizontal in Verlängerung der Leuchtmittel 4 und 5 entlang der nicht gezeigten B-Säulen des Kraftfahrzeugs 1 und die Leuchtmittel 8, 9 setzen diese durch die Leuchtmittel 4 und 6 bzw. 5 und 7 gebildete Linie entlang der nicht gezeigten Hintertüren des Kraftfahrzeugs 1 fort. Die Leuchtmittel 2 - 9 bilden somit eine abgesehen von einigen Unterbrechungen im Wesentlichen den seitlichen und vorderen Umfang des Kraftfahrzeugs 1 umlaufende Leuchtlinie, um den Innenraum des Kraftfahrzeugs 1 zu beleuchten. Um die Konturen des Kraftfahrzeugs 1 weiter hervorzuheben, ist zusätzlich das linienförmige Leuchtmittel 10 vorgesehen, das sich entlang der Kontur der Mittelkonsole 13 des Kraftfahrzeugs 1 erstreckt.

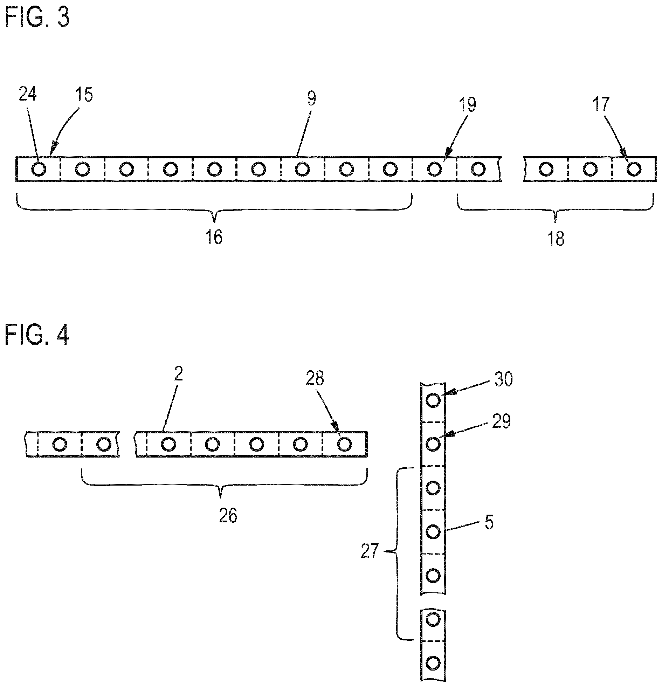

Eine Detaildarstellung der Leuchtmittel ist am Beispiel des Leuchtmittels 9 in Fig. 3 gezeigt. Das Leuchtmittel 9 weist mehrere Leuchtsegmente 15, 17, 19 auf, die jeweils ein fest vorgegebenes Abstrahlprofil aufweisen und separat durch eine Steuereinrichtung 14 des Kraftfahrzeugs in Abhängigkeit einer Entfernungsinformation zur Vorgabe einer Leuchthelligkeit und/oder einer Leuchtfarbe der Leuchtsegmente 15, 17, 19 ansteuerbar sind. Die einzelnen Leuchtsegmente weisen jeweils ein Leuchtelement 24 auf, das beispielsweise eine RGB-LED sein kann, dessen Leuchthelligkeit und/oder Leuchtfarbe durch die Steuereinrichtung 14 steuerbar ist. Zwischen den einzelnen Leuchtelementen 24 und dem Fahrzeuginnenraum ist ein nicht gezeigter Diffusor angeordnet, der das Licht der einzelnen Leuchtelemente 24 derart streut, dass bei einem Betrieb der Leuchtelemente 24 benachbarter Leuchtsegmente 15, 17, 19 in Horizontalrichtung eine im Wesentlichen homogene Leuchthelligkeit und Farbe erreicht wird.

Das Kraftfahrzeug 1 weist eine Navigationseinrichtung 20 mit einer integrierten Positionserfassungseinrichtung 21 auf. Alternativ könnte eine separat ausgebildete Positionserfassungseinrichtung 21 genutzt werden. Durch einen Nutzer des Kraftfahrzeugs 1 kann an der Navigationseinrichtung 20 ein Zielort gewählt werden. Alternativ wäre es möglich, einen Zielort des Kraftfahrzeugs 1 durch statistische Auswertung der Fahrroute automatisch zu bestimmen. Ein derartiges Vorgehen ist aus dem Stand der Technik bekannt und soll daher nicht detailliert erläutert werden. Eine manuelle Eingabe eines Zielortes ist über die Ausgabeeinrichtung 22 und den Dreh-Drück-Steller 23 möglich.

Nach Vorgabe des Zielortes wird durch die Steuereinrichtung 14 die Ausgabeeinrichtung 22 des Kraftfahrzeugs zur Ausgabe einer Bedienanfrage angesteuert, ob eine Visualisierung einer Entfernung durch die linienförmigen Leuchtmittel 2 - 10 erfolgen soll. Anschließend wird über den Dreh-Drück-Steller 23 von der Steuereinrichtung eine Antworteingabe erfasst. Zusätzlich kann abgefragt werden, welches der linienförmigen Leuchtmittel zur Entfernungsdarstellung genutzt werden soll bzw. in welchem Raumwinkel des Kraftfahrzeugs eine Entfernungsdarstellung erfolgen soll. Es kann auch möglich sein zu wählen, dass die Entfernung in jener Richtung angezeigt wird, in der sich der Zielort befindet. Entsprechende Daten können nach jeder Zielortvorgabe abgefragt werden, es ist jedoch auch möglich, sie in einem Fahrer- oder Fahrzeugprofil zu speichern und bei Bedarf wieder zu laden.

Die Ansteuerung der Leuchtsegmente 15, 17, 19 in Abhängigkeit einer Entfernung vom Zielort wird im Folgenden mit Bezug auf Fig. 3 beispielhaft für den Fall beschrieben, dass das Leuchtmittel 9 zur Anzeige der Entfernung ausgewählt wurde. Eine Entfernungsdarstellung an einer der hinteren Türen kann beispielsweise vorteilhaft sein, wenn eine Entfernung bis zu einem Zielort für ein mitfahrendes Kind visualisiert werden soll.

Nach der Aktivierung des Betriebsmodus der Steuereinrichtung 14 zur entfernungsabhängigen Steuerung der Leuchtsegmente 15, 17, 19 werden die Leuchtsegmente 15, 17, 19 zunächst gemäß eines vorgegebenen Musters angesteuert. Diese Anfangsanimation der Lichtdarstellung visualisiert den Beginn des entsprechenden Betriebsmodus. Beispielsweise können zunächst alle Leuchtsegmente 15, 17, 19 deaktiviert werden und dann, ausgehend von einem mittleren Leuchtsegment 19 die Helligkeit zu beiden Seiten hin fortlaufend erhöht werden, um eine Art "Ausfahren" eines Lichtbalkens darzustellen. Die Ansteuerung der einzelnen Leuchtsegmente 15, 17, 19 folgt hierbei durch die Steuereinrichtung 14 über einen Fahrzeugbus 25, beispielsweise einen CAN-Bus. Die Ansteuerung kann derart erfolgen, dass für jedes der Leuchtsegmente 15, 17, 19 eine jeweilige Pulsbreite für das zugeordnete Leuchtelement 24 bzw. für die Farbkomponenten des jeweiligen Leuchtelements 24, also beispielsweise für rot, grün und blau, vorgegeben wird. Die Pulsweitenmodulation des Betriebsstroms kann im Leuchtmittel 9 selbst erfolgen.

Die Ansteuerung der einzelnen Leuchtsegmente 15, 17, 19 soll derart erfolgen, dass eine Entfernungsinformation, die eine räumliche oder eine prognostizierte zeitliche Entfernung zwischen der Egoposition und dem vorgegebenen Zielort beschreibt, visualisiert wird. Hierbei wird eine vorgegebene Anfangsanzahl von Leuchtsegmenten 15, 17, 19 einer Anfangsentfernung zugeordnet, die der Entfernung zwischen der Egoposition und dem Zielort zum Zeitpunkt der Vorgabe des Zielortes entspricht. Diese Anfangsanzahl der Leuchtsegmente wird gemäß der Entfernungsinformation, die die momentane Entfernung zwischen der Egoposition und dem Zielort beschreibt, in zwei Gruppen 16, 18 aufgeteilt, die jeweils eine von der Entfernungsinformation abhängige Anzahl horizontal benachbarter Leuchtsegmente umfassen. Die Leuchtsegmente 15, 17 der Gruppen 16, 18 werden so angesteuert, dass die Leuchtsegmente 15, 17 innerhalb einer der Gruppen 16, 18 jeweils die gleiche Leuchthelligkeit und Leuchtfarbe aufweisen, wobei die Leuchthelligkeit und/oder Leuchtfarbe für die Gruppen 16, 18 voneinander unterschiedlich sind. Für das Leuchtsegment 19, das zwischen den Gruppen 16, 18 liegt, wird eine weitere Leuchthelligkeit und/oder Leuchtfarbe vergeben. Beispielsweise können die Leuchtsegmente 15 in der Gruppe 16 grün leuchten, die Leuchtsegmente 17 in der Gruppe 18 gelb und das Leuchtsegment 19 rot.

Die Anzahl der Leuchtsegmente in den Gruppen 16, 18 wird jeweils in Abhängigkeit der Entfernungsinformation vorgegeben. Hierbei entspricht das Verhältnis der Anzahl der Leuchtsegmente in der ersten Gruppe 16 zu der Anzahl der Leuchtsegmente in der zweiten Gruppe 18 dem Verhältnis einer ausgehend von der Anfangsentfernung bereits zurückgelegten Entfernung zu der zum Zielort verbleibenden Entfernung. Die Gruppe 16 visualisiert somit die bereits zurückgelegte Entfernung, die Gruppe 18 die noch verbleibende Entfernung und das Leuchtsegment 19 die momentane Position des Kraftfahrzeugs.

In alternativen Ausführungsformen wäre es möglich, auf die separate Darstellung der Position des Kraftfahrzeugs als Leuchtsegment 19 zu verzichten, so dass die erste und zweite Gruppe 16, 18 direkt benachbart zueinander dargestellt werden können. Es ist auch möglich, nur einen Teil eines Leuchtmittels zur Entfernungsdarstellung zu nutzen, wobei links bzw. rechts von den dargestellten Gruppen 16, 18 liegende Leuchtsegmente deaktiviert werden können oder zur Abstrahlung einer anderen Leuchtfarbe und/oder Leuchthelligkeit angesteuert werden können.

Es ist möglich, dass mehrere der Leuchtmittel gemeinsam genutzt werden, um die Entfernungsinformation zu visualisieren. Ein Beispiel hierfür ist in Fig. 4 dargestellt. In diesem wirken die Leuchtmittel 2 und 5 zusammen, um eine Entfernungsinformation im Beifahrerbereich zu visualisieren. Hierbei werden jeweils Teilmengen 26, 27 der Leuchtsegmente 28, 29, 30 der Leuchtmittel 2 und 5 zur Entfernungsvisualisierung genutzt, wie sie zur Fig. 3 erläutert wurde. Die Ansteuerung erfolgt so, als wären die Leuchtsegmente 28, 29 unmittelbar horizontal zueinander benachbarte Leuchtsegmente 28, 29 eines einzelnen Leuchtmittels 2 - 10. Es wird somit eine Art umlaufendes Leuchtband erzeugt, das angesteuert wird, als ob es sich um ein einzelnes linienförmiges Leuchtmittel 2 - 10 handeln würde. Es ist dabei möglich, einzelne Leuchtsegmente 30, die beispielsweise über dem Bereich dieses umlaufenden Leuchtbandes hinausragen würden, zu deaktivieren oder zur Abstrahlung einer anderen Leuchtfarbe und/oder Leuchthelligkeit anzusteuern, als die im Rahmen der Entfernungsdarstellung genutzten Bereiche 26, 27 der Leuchtsegmente.

## Patentansprüche

1. Kraftfahrzeug, umfassend wenigstens ein linienförmiges Leuchtmittel (2, 3, 4, 5, 6, 7, 8, 9, 10) zur direkten und/oder indirekten Beleuchtung eines Fahrzeuginnenraums, das sich zumindest abschnittsweise horizontal entlang wenigstens eines Bauteils des Kraftfahrzeugs (1) erstreckt, wobei das Leuchtmittel (2, 3, 4, 5, 6, 7, 8, 9, 10) horizontal in mehrere Leuchtsegmente (15, 17, 19, 28, 29, 30) unterteilt ist, die jeweils ein fest vorgegebenes Abstrahlprofil aufweisen, wobei das Kraftfahrzeug (1) eine Positionserfassungseinrichtung (21) zur Erfassung einer Egoposition des Kraftfahrzeugs (1) umfasst, wobei die Leuchtsegmente (15, 17, 19, 28, 29, 30) separat durch eine Steuereinrichtung (14) des Kraftfahrzeugs (1) in Abhängigkeit einer Entfernungsinformation zur Vorgabe einer Leuchthelligkeit und/oder einer Leuchtfarbe der Leuchtsegmente (15, 17, 19, 28, 29, 30) ansteuerbar sind, wobei durch die Steuereinrichtung (14) eine erste Leuchthelligkeit und/oder Leuchtfarbe für wenigstens eine Gruppe (16, 18) horizontal benachbarter Leuchtsegmente und eine unterschiedliche zweite Leuchthelligkeit und/oder Leuchtfarbe für wenigstens ein zu der Gruppe (16, 18) horizontal benachbartes Leuchtsegment (19) vorgebbar ist,
**dadurch gekennzeichnet,**
**dass** die Entfernungsinformation eine räumliche oder eine prognostizierte zeitliche Entfernung zwischen der Egoposition und einem vorgegebenen Zielort beschreibt, wobei die Anzahl der Leuchtsegmente (15, 17, 19, 28, 29, 30) in der Gruppe (16, 18) in Abhängigkeit der Entfernungsinformation vorgegeben wird, und dass durch die Steuereinrichtung (14) in Abhängigkeit einer Bedieneingabe und/oder eines den Zielort betreffenden Zielparameters eine horizontale Position der Gruppe (16, 18) auf dem Leuchtmittel (2, 3, 4, 5, 6, 7, 8, 9, 10) oder den Leuchtmitteln (2, 3, 4, 5, 6, 7, 8, 9, 10) vorgegeben wird.

2. Kraftfahrzeug nach Anspruch 1,
**dadurch gekennzeichnet,**
**dass** es mehrere der linienförmigen Leuchtmittel (2, 3, 4, 5, 6, 7, 8, 9, 10) umfasst, die sich horizontal in Umfangsrichtung des Fahrzeuginnenraums zueinander benachbart oder voneinander beabstandet erstrecken, wobei die Steuereinrichtung dazu eingerichtet ist, die Leuchthelligkeit und/oder Leuchtfarbe der Leuchtsegmente (15, 17, 19, 28, 29, 30) wenigstens zweier der Leuchtmittel (2, 3, 4, 5, 6, 7, 8, 9, 10) gleichzeitig in Abhängigkeit der Entfernungsinformation zu steuern und/oder wenigstens eines der Leuchtmittel (2, 3, 4, 5, 6, 7, 8, 9, 10) in Abhängigkeit einer Bedieneingabe und/oder eines den Zielort betreffenden Zielparameters auszuwählen, um die Leuchthelligkeit und/oder Leuchtfarbe der Leuchtsegmente (15, 17, 19, 28, 29, 30) dieses Leuchtmittels (2, 3, 4, 5, 6, 7, 8, 9, 10) in Abhängigkeit der Entfernungsinformation zu steuern.

3. Kraftfahrzeug nach Anspruch 1 oder 2,
**dadurch gekennzeichnet,**
**dass** der Zielparameter eine in Abhängigkeit der Egoposition und des Zielorts ermittelte Richtung ist, in der sich der Zielort befindet.

4. Kraftfahrzeug nach einem der vorangehenden Ansprüche,
**dadurch gekennzeichnet, dass** durch die Steuereinrichtung (14) genau eines der Leuchtsegmente (19) in Abhängigkeit der Entfernung auswählbar ist, das zur Abstrahlung von Licht mit einer vorgegebenen Leuchtfarbe und/oder Leuchthelligkeit angesteuert wird.

5. Kraftfahrzeug nach einem der vorangehenden Ansprüche,
**dadurch gekennzeichnet, dass** das Bauteil ein Armaturenbrett (11) und/oder eine Tür (12) und/oder eine Karosseriesäule und/oder eine Mittelkonsole (13) des Kraftfahrzeugs ist.

6. Kraftfahrzeug nach einem der vorangehenden Ansprüche,
**dadurch gekennzeichnet**,
der Zielort durch eine Bedieneingabe vorgegeben wird, wobei durch die Steuereinrichtung (14) nach Vorgabe des Zielortes eine Ausgabeeinrichtung (22) des Kraftfahrzeugs zur Ausgabe einer Bedienanfrage ansteuerbar und eine darauffolgende Antworteingabe erfassbar ist, wobei in Abhängigkeit der Antworteingabe ein Betriebsmodus der Steuereinrichtung (14) zur von der Entfernung zum Zielort abhängigen Steuerung der Leuchtsegmente (15, 17, 19, 28, 29, 30) aktiviert oder deaktiviert wird.

7. Kraftfahrzeug nach einem der vorangehenden Ansprüche,
**dadurch gekennzeichnet,**
**dass** durch die Steuereinrichtung (14) nach einer Zielvorgabe und/oder nach Aktivierung eines Betriebsmodus der Steuereinrichtung (14) zur von der Entfernung abhängigen Steuerung der Leuchtsegmente (15, 17, 19, 28, 29, 30) und/oder bei einem Erreichen eines Zielortes die Leuchtsegmente (15, 17, 19, 28, 29, 30) zumindest teilweise für einen vorgegebenen Zeitraum gemäß eines vorgegebenen Musters ansteuerbar sind.

8. Kraftfahrzeug nach einem der vorangehenden Ansprüche,
**dadurch gekennzeichnet,**
**dass** die horizontale Ausdehnung der Leuchtsegmente (15, 17, 19, 28, 29, 30) jeweils zwischen 2 mm und 100 mm ist.

## Claims

1. Motor vehicle, comprising at least one linear lighting means (2, 3, 4, 5, 6, 7, 8, 9, 10) for the direct and/or indirect illumination of a vehicle interior, which extends at least in sections horizontally along at least one component of the motor vehicle (1), wherein the lighting means (2, 3, 4, 5, 6, 7, 8, 9, 10) is divided horizontally into several light segments (15, 17, 19, 28, 29, 30), which have in each case a fixedly predetermined radiation profile, wherein the motor vehicle (1) comprises a position determining device (21) for determining an ego position of the motor vehicle (1), wherein the light segments (15, 17, 19, 28, 29, 30) are able to be controlled separately by a control device (14) of the motor vehicle (1) depending on a distance information for the specification of a light intensity and/or a light colour of the light segments (15, 17, 19, 28, 29, 30), wherein by means of the control device (14) a first light intensity and/or light colour can be predetermined for at least one group (16, 18) of horizontally adjacent light segments and a different second light intensity and/or light colour for at least one light segment (19) horizontally adjacent to the group (16, 18),
**characterised in**
**that** the distance information describes a spatial or a projected temporal distance between the ego position and a predetermined target location, wherein the number of the light segments (15, 17, 19, 28, 29, 30) in the group (16, 18) is predetermined depending on the distance information, and that by means of the control device (14), depending on an operating input and/or a target parameter concerning the target location, a horizontal position of the group (16, 18) is predetermined on the one lighting means (2, 3, 4, 5, 6, 7, 8, 9, 10) or a plurality of lighting means (2, 3, 4, 5, 6, 7, 8, 9, 10).

2. Motor vehicle according to claim 1,
**characterised in**
**that** it comprises several of the linear lighting means (2, 3, 4, 5, 6, 7, 8, 9, 10) which extend horizontally adjacent to one another or spaced from one another in peripheral direction of the vehicle interior, wherein the control device is configured to control the light intensity and/or light colour of the light segments (15, 17, 19, 28, 29, 30) of at least two of the lighting means (2, 3, 4, 5, 6, 7, 8, 9, 10) simultaneously depending on the distance information and/or to select at least one of the lighting means (2, 3, 4, 5, 6, 7, 8, 9, 10) depending on an operating input and/or a target parameter concerning the target location, in order to control the light intensity and/or light colour of the light segments (15, 17, 19, 28, 29, 30) of this lighting means (2, 3, 4, 5, 6, 7, 8, 9, 10) depending on the distance information.

3. Motor vehicle according to claim 1 or 2,
**characterised in**
**that** the target parameter is a direction, determined depending on the ego position and the target location, in which the target location is located.

4. Motor vehicle according to any of the preceding claims,
**characterised in that** by means of the control device (14) precisely one of the light segments (19) can be selected depending on the distance, which light segment is controlled to radiate light with a predetermined light colour and/or light intensity.

5. Motor vehicle according to any of the preceding claims,
**characterised in that** the component is a dashboard (11) and/or a door (12) and/or a vehicle body column and/or a central console (13) of the motor vehicle.

6. Motor vehicle according to any of the preceding claims,
**characterised in**
the target location is predetermined by an operating input, wherein by means of the control device (14) after predetermination of the target location an output device (22) of the motor vehicle can be controlled to output an operating request and a subsequent response input can be detected, wherein depending on the response input an operating mode of the control device (14), for controlling the light segments (15, 17, 19, 28, 29, 30) depending on the distance to the target location, is activated or deactivated.

7. Motor vehicle according to any of the preceding claims,
**characterised in**
**that** by means of the control device (14) after a target determination and/or after activating an operating mode of the control device (14) for controlling the light segments (15, 17, 19, 28, 29, 30) depending on the distance and/or when reaching a target location the light segments (15, 17, 19, 28, 29, 30) can be controlled at least partially for a predetermined time duration according to a predetermined pattern.

8. Motor vehicle according to any of the preceding claims,
**characterised in**
**that** the horizontal expansion of the light segments (15, 17, 19, 28, 29, 30) is respectively between 2 mm and 100 mm.

## Revendications

1. Véhicule automobile, comprenant au moins un moyen d'éclairage linéaire (2, 3, 4, 5, 6, 7, 8, 9, 10) pour l'éclairage direct et/ou indirect d'un habitacle de véhicule, qui s'étend au moins par sections horizontalement le long d'au moins un composant du véhicule automobile (1), dans lequel le moyen d'éclairage (2, 3, 4, 5, 6, 7, 8, 9, 10) est divisé horizontalement en plusieurs segments lumineux (15, 17, 19, 28, 29, 30), qui présentent respectivement un profil de rayonnement prescrit fixement, dans lequel le véhicule automobile (1) comprend un dispositif de détection de position (21) pour la détection d'une propre position du véhicule automobile (1), dans lequel les segments lumineux (15, 17, 19, 28, 29, 30) peuvent être commandés séparément par un dispositif de commande (14) du véhicule automobile (1) en fonction d'une information de distance pour la prescription d'une luminosité et/ou d'une couleur des segments lumineux (15, 17, 19, 28, 29, 30), dans lequel une première luminosité et/ou couleur lumineuse pour au moins un groupe (16, 18) de segments lumineux contigus horizontalement et une seconde luminosité et/ou couleur lumineuse différente pour au moins un segment lumineux (19) contigu horizontalement au groupe (16, 18) sont prescriptibles par le dispositif de commande (14),
**caractérisé en ce**
**que** l'information de distance décrit une distance spatiale ou une distance temporelle pronostiquée entre la propre position et un lieu cible prescrit, dans lequel le nombre des segments lumineux (15, 17, 19, 28, 29, 30) dans le groupe (16, 18) est prescrit en fonction de l'information de distance, et qu'une position horizontale du groupe (16, 18) sur le moyen d'éclairage (2, 3, 4, 5, 6, 7, 8, 9, 10) ou les moyens d'éclairage (2, 3, 4, 5, 6, 7, 8, 9, 10) est prescrite par le dispositif de commande (14) en fonction d'une entrée de commande et/ou d'un paramètre cible concernant le lieu cible.

2. Véhicule automobile selon la revendication 1,
**caractérisé en ce**
**qu'**il comporte plusieurs des moyens d'éclairage linéaires (2, 3, 4, 5, 6, 7, 8, 9, 10) qui s'étendent horizontalement dans le sens périphérique de l'habitacle de véhicule de manière contigüe les uns par rapport aux autres ou à distance les uns des autres, dans lequel le dispositif de commande est aménagé afin de commander la luminosité et/ou couleur des segments lumineux (15, 17, 19, 28, 29, 30) au moins de deux des moyens d'éclairage (2, 3, 4, 5, 6, 7, 8, 9, 10) en même temps en fonction de l'information de distance et/ou de sélectionner au moins un des moyens d'éclairage (2, 3, 4, 5, 6, 7, 8, 9, 10) en fonction d'une entrée de commande et/ou d'un paramètre cible concernant le lieu cible afin de commander la luminosité et/ou la couleur des segments lumineux (15 17, 19, 28, 29, 32) de ce moyen d'éclairage (2, 3, 4, 5, 6, 7, 8, 9, 10) en fonction de l'information de distance.

3. Véhicule automobile selon la revendication 1 ou 2,
caractérisé en ce
le paramètre cible est une direction déterminée en fonction de la propre position et du lieu cible dans laquelle le lieu cible se trouve.

4. Véhicule automobile selon l'une quelconque des revendications précédentes,
**caractérisé en ce que** par le dispositif de commande (14) précisément un des segments lumineux (19) est sélectionnable en fonction de la distance, lequel est commandé pour le rayonnement de la lumière avec une couleur lumineuse et/ou luminosité prescrite.

5. Véhicule automobile selon l'une quelconque des revendications précédentes,
**caractérisé en ce que** le composant est un tableau de bord (11) et/ou une porte (12) et/ou un montant de carrosserie et/ou une console centrale (13) du véhicule automobile.

6. Véhicule automobile selon l'une quelconque des revendications précédentes,
**caractérisé en ce que**
le lieu cible est prescrit par une entrée de commande, dans lequel par le dispositif de commande (14) après la prescription du lieu cible un dispositif de sortie (22) du véhicule automobile pour la sortie d'une demande de commande peut être commandé et une entrée de réponse consécutive peut être détectée, dans lequel en fonction de l'entrée de réponse un mode de fonctionnement du dispositif de commande (14) est activé ou désactivé pour la commande dépendant de la distance du lieu cible des segments lumineux (15, 17, 19, 28, 29, 30).

7. Véhicule automobile selon l'une quelconque des revendications précédentes,
**caractérisé en ce**
**que** par le dispositif de commande (14) après une prescription cible et/ou après l'activation d'un mode de fonctionnement du dispositif de commande (14) pour la commande dépendant de la distance des segments lumineux (15, 17, 19, 28, 29, 30) et/ou pour une atteinte d'un lieu cible les segments lumineux (15, 17, 19, 28, 29, 30) peuvent être commandés au moins partiellement pour une période prescrite selon un modèle prescrit.

8. Véhicule automobile selon l'une quelconque des revendications précédentes,
**caractérisé en ce**
**que** l'extension horizontale des segments lumineux (15, 17, 19, 28, 29, 30) est respectivement comprise entre 2 mm et 100 mm.
